# EUROPÄISCHE PATENTSCHRIFT

(11) **EP 1 262 274 B1**
(45) Veröffentlichungstag und Bekanntmachung des Hinweises auf die Patenterteilung: **19.01.2005**
(21) Anmeldenummer: 02010030.1
(22) Anmeldetag: 06.05.2002
(51) Int. Cl.: B23K 35/40, B23B 5/16, B23K 11/30

(54) **Vorrichtung zum Umformen von Elekrodenkappen**
Apparatus for reshaping the caps of spot welding electrodes
Dispositif pour la remise en forme des capuchons d'électrodes de soudage

(30) Priorität: 25.05.2001 DE 10125481
(43) Veröffentlichungstag der Anmeldung: 04.12.2002
(73) Patentinhaber: Bräuer, Andreas, 09456 Annaberg-Buchholz (DE)
(72) Erfinder: Bräuer, Andreas, 09456 Annaberg-Buchholz (DE)
(74) Vertreter: Kath, Gunther (DE)

(56) Entgegenhaltungen:
- DE-U- 20 100 102
- US-A- 4 856 949
- US-A- 4 916 931

## Beschreibung

Die Erfindung betrifft eine Vorrichtung zum Umformen von Elektrodenkappen für die Widerstandsschweißtechnik.

Elektroden für die Widerstandsschweißtechnik, die in Roboter- und Handschweißzangen eingesetzt werden, müssen in Abhängigkeit vom Verschleiß an den Kappen nachgearbeitet werden, um die Zuverlässigkeit und Festigkeit der Schweißpunkte zu gewährleisten. Insbesondere an Schweißrobotern mit hoher Schweißfolge und der gleichzeitigen Forderung nach guter Reproduzierbarkeit der Schweißverbindung, wie sie im Fahrzeugbau gestellt wird, ist eine Nachbearbeitung zur Urform der Elektrodenkappe von großer Bedeutung.

Dafür werden bekannterweise Vorrichtungen eingesetzt, die in einer angetriebenen Fräseraufnahme eine Schneidplatte enthalten (DE 299 03 526 U1). Ein Nachteil derartiger Vorrichtungen ist es, dass mit jeder Nachbearbeitung Material von der Elektrodenkappe abgetragen wird, so daß die Kappe an Volumen verliert. Zudem müssen die entstandenen Späne zuverlässig von der Quelle ihrer Entstehung während des Fräsvorganges nach außen abgeführt werden. Das erfordert besondere konstruktive Ausgestaltungen der Fräseraufnahme und eine Zusatzeinrichtung zum Ableiten der Späne.

Es ist weiterhin bekannt, in eine als Formkopf ausgebildete Aufnahme eine mit Lagerungen versehene Formwalze anzuordnen, deren Kontur im Arbeitsbereich der angestrebten Kappengeometrie entspricht (DE 201 00 102.0 U1). Mit dieser Vorrichtung wird ein weitgehend spanloses Nacharbeiten der Urform der Elektroden an der Kappe angestrebt. Diese Vorrichtung weist eine relativ große Öffnung auf, so dass keine exakte Führung der Elektrode relativ zur Formwalze gewährleistet werden kann. Ein weiterer Nachteil besteht darin, dass sich an den Kanten auf Grund der Reibung während des Bearbeitungsvorganges Späne bilden.

Aufgabe der Erfindung ist es, eine Vorrichtung zu entwickeln, die eine exakte Positionierung der Elektrodenkappen relativ zum Werkzeug und durch verringerte Reibung ein spanloses Nacharbeiten der Urform der Elektrodenkappen ermöglicht.

Erfindungsgemäß wird die Aufgabe dadurch gelöst, dass die Vorrichtung aus einer elektrisch angetriebenen als Formkopf ausgebildeten Aufnahme besteht, wobei der Formkopf mehrere, mindestens annähernd symmetrisch angeordnete nicht angetriebene Formwalzen, von denen eine über die Mitte des Formkopfes hinaus steht, und in ihm integrierte Lagerungen für die Formwalzen aufweist, wobei die Konturen der Formwalzen in ihrem Arbeitsbereich der angestrebten Kappengeometrie der zu bearbeitenden Elektrode entsprechen.

Zur exakteren Führung und zur Begrenzung der axialen Verschiebung der Fonnwalzen dienen in einer Vorzugsausführung jeweils an Druckscheiben anliegende Druckkugeln. In einer weiteren Ausgestaltung weist die Vorrichtung drei, um jeweils ca. 120 Grad versetzte Formwalzen auf.

Aufbau und Wirkungsweise der erfindungsgemäßen Vorrichtung werden im folgenden anhand von Zeichnungen beispielhaft beschrieben.

Es zeigen:

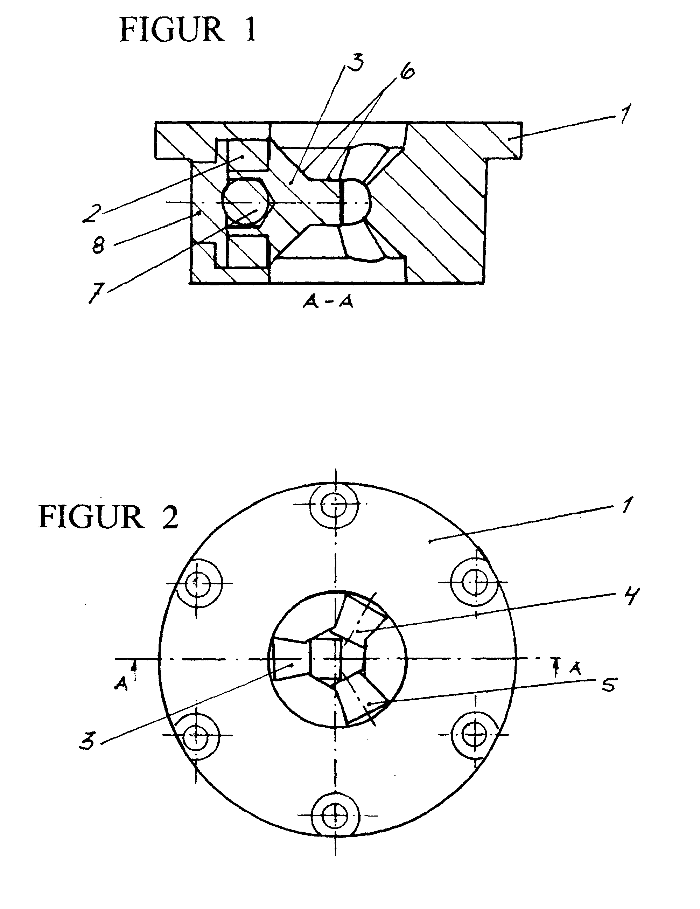

- Figur 1: einen Längsschnitt A-A durch eine Vorrichtung
- Figur 2: eine Draufsicht auf eine Vorrichtung mit drei Formwalzen

Die in bekannter Weise elektrisch angetriebene Aufnahme ist als Formkopf 1 ausgebildet. Der Formkopf 1 enthält die in jeweils einer Lagerung 2 geführten, nicht angetriebenen Formwalzen 3, 4 und 5. Die Formwalze 3 steht dabei über die Mitte hinaus und gewährleistet so ein Nacharbeiten der Kappen an der Spitze, während die anderen beiden Formwalzen 4 und 5 kürzer ausgeführt sind. Die drei Formwalzen 3, 4, 5 besitzen in ihrem Arbeits- bzw. Eingriffsbereich 6 Konturen, die der angestrebten Kappengeometrie entsprechen. Zur Begrenzung der axialen Verschiebung der Formwalzen dient je ein Axiallager, das aus einer Druckkugel 7 und einer anliegenden Druckscheibe 8 besteht und über Schrauben gespannt werden kann. Der Formkopf wird in Bewegung gesetzt und die Schweißektrodenkappen mittels Roboterzangen oder handgeführte Zangen paarweise (hier: oben und unten) in den Formkopf 1 eingeführt und fixiert. Die Formwalzen 3, 4, 5 arbeiten an den Eingriffsflächen 6 das Profil der Kappen spanlos nach. Die Formwalzen selbst führen während dieses Vorgangs in den Lagerungen 2 eine zusätzliche, durch den Kontakt mit der Elektrodenkappe ausgelöste Drehbewegung um ihre Längsachse aus.

Durch die Anordnung mehrerer Formwalzen im Formkopf ist eine exakte Führung der Elektrode gegenüber den als Werkzeug fungierenden Formwalzen möglich. Die gegenüber einer Einwalzen-Vorrichtung reduzierte Reibung gestattet ein wirtschaftliches und formgetreues spanloses Nacharbeiten der Urform von Elektrodenkappen von Schweißelektroden. Da die Konturen der Elektrodenkappen durch ein plastisches Fließen des Materials nachgearbeitet werden, tritt keine Volumenänderung an den Elektrodenkappen ein, die somit lange im Einsatz bleiben können.

Die Vorrichtung kann je nach Erfordernis auch in anderen Lagen als der hier beschriebenen zum Einsatz kommen.

Mit der Vorrichtung kann der gesamte Bereich der in der Widerstandsschweißtechnik angewandten Elektrodengrößen und Kappenformen nachgearbeitet werden.

## Patentansprüche

1. Vorrichtung zum Umformen von Elektrodenkappen mit einer elektrisch angetriebenen und als Formkopf (1) ausgebildeten Aufnahme, **dadurch gekennzeichnet, dass** der Formkopf (1) mehrere, mindestens annähernd symmetrisch angeordnete, nicht angetriebene Formwalzen (3, 4, 5), von denen eine Formwalze (3) über die Mitte des Formkopfes (1) hinaus steht, und in ihm integrierte Lagerungen (2) für die Formwalzen (3, 4, 5) aufweist, wobei die Konturen der Formwalzen (3, 4, 5) in ihrem Arbeitsbereich (6) der angestrebten Kappengeometrie der zu bearbeitenden Elektrode entsprechen.

2. Vorrichtung zum Umformen von Elektrodenkappen nach Anspruch 1, **dadurch gekennzeichnet, dass** jede Formwalze (3, 4, 5) durch eine an einer Druckscheibe (8) anliegenden Druckkugel (7) in ihrer axialen Verschiebung begrenzt wird.

3. Vorrichtung zum Umformen von Elektrodenkappen nach Anspruch 1, **dadurch gekennzeichnet, dass** sie drei, um jeweils ca. 120 Grad versetzte Formwalzen (3, 4, 5) aufweist.

## Claims

1. Apparatus for reshaping the caps of spot welding electrodes with an electrically driven accomodation formed as a forming head (1), **characterized by** the fact that the forming head (1) possesses several non-driven forming rolls (3, 4, 5) being at least arranged in an approximately symmetrical way out of which one forming roll (3) projects out beyond the middle of the forming head (1) and that it possesses bearings (2) for the forming rolls (3, 4, 5) that are integrated in it. In their working area (6), the contours of the forming rolls (3, 4, 5) correspond to the desired cap geometry of the electrode to be machined.

2. Apparatus for reshaping the caps of spot welding electrodes according to claim 1, **characterized by** the fact that the axial displacement of each forming roll (3, 4, 5) is limited by a pressure ball (7) bearing against a pressure disk (8).

3. Apparatus for reshaping the caps of spot welding electrodes according to claim 1, **characterized by** the fact that it possesses three forming rolls (3, 4, 5), each of them staggered by approx. 120 degrees.

## Revendications

1. Dispositif pour la remise en forme des capuchons d'électrodes de soudage avec un logement actionné à l'électricité et formé comme une tête de formage (1), **caracterisé par le fait que** la tête de formage (1) possède plusieurs rouleaux de formage (3, 4, 5) non-actionnés qui sont au moins arrangés d'une manière approximativement symétrique desquels un rouleau de formage (3) dépasse le milieu de la tête de formage (1) et qu'elle possède des paliers (2) pour les rouleaux de formage (3, 4, 5) qui sont intégrés dans la tête de formage (1). Dans leur zone de travail (6), les contours des rouleaux de formage (3, 4, 5) correspondent à la géométrie des capuchons désirée de l'électrode à usiner.

2. Dispositif pour la remise en forme des capuchons d'électrodes de soudage selon la revendication 1, **caracterisé par le fait que** le déplacement axial de chaque rouleau de formage (3, 4, 5) est limité par une bille de pression (7) collant à une disque de pression (8).

3. Dispositif pour la remise en forme des capuchons d'électrodes de soudage selon la revendication 1, **caracterisé par le fait qu'**il possède trois rouleaux de formage (3, 4, 5), chacun placé alternativement d'environ 120 degrés.
